Europäisches Patentamt

European Patent Office

Office européen des brevets

(19)

(11) Veröffentlichungsnummer: **0 201 594**
**B1**

(12) **EUROPÄISCHE PATENTSCHRIFT**

(45) Veröffentlichungstag der Patentschrift: **18.04.90**

(21) Anmeldenummer: **85906050.1**

(22) Anmeldetag: **12.11.85**

(86) Internationale Anmeldenummer:
**PCT/EP85/00604**

(87) Internationale Veröffentlichungsnummer:
**WO 86/03018 22.05.86 Gazette 86/11**

(51) Int. Cl.⁵: **G 03 B 23/02**

(54) VORRICHTUNG ZUM ZYKLISCHEN UMSCHICHTEN EINES STAPELS RECHTECKIGER ODER QUADRATISCHER BLÄTTER.

(30) Priorität: **13.11.84 DE 3441481**

(43) Veröffentlichungstag der Anmeldung:
**20.11.86 Patentblatt 86/47**

(45) Bekanntmachung des Hinweises auf die Patenterteilung:
**18.04.90 Patentblatt 90/16**

(84) Benannte Vertragsstaaten:
**AT BE CH DE FR GB IT LI NL SE**

(56) Entgegenhaltungen:
**DE-A-3 014 394**
**FR-A-2 912 941**

(73) Patentinhaber: **LICINVEST AG**
**Hartbertstrasse 9**
**CH-7002 Chur (CH)**

(72) Erfinder: **ACKERET, Peter**
**Allmendstrasse 18**
**CH-8700 Küsnacht (CH)**

(74) Vertreter: **Röhl, Wolf Horst, Dipl.-Phys., Dr. et al**
**Dipl.-Ing. K. Sparing Dipl.-Phys. Dr. W.H. Röhl**
**Rethelstrasse 123**
**D-4000 Düsseldorf 1 (DE)**

Courier Press, Leamington Spa, England.

**Beschreibung**

Die Erfindung betrifft eine Vorrichtung zum zyklischen Umschichten eines Stapels rechteckiger oder quadratischer Blätter oder einen sogenannten "Bildwechsler".

Bildwechsler sind aus den US-Patentschriften 4.238.898, 4.238.899, 4.241.528, 4.241.529, 4.245.417, 4.259.802 und 4.376.348 sowie der DE-A-29 12 941 bekannt. Ihnen allen liegt das Prinzip zugrunde, daß ein Stapel von Bildern, wobei insbesondere an Fotoabzüge zu denken ist, von zwei relativ zueinander verschieblichen Rahmenteilen aufgenommen ist, von denen eines ein Betrachtungsfenster aufweisen kann. Jeweils bei einem vollständigen Bewegungszyklus der Rahmenteile das heißt vollständig auseinanderziehen und wieder vollständig zusammenschieben wird ein Bild an einem Stapelende abgenommen und am andern Stapelende wieder zugefügt. Hierfür weisen die Bildwechsler die folgenden Komponenten auf:

Eine Trenneinrichtung löst ein Einzelbild vom Stapel;

eine Zufuhreinrichtung führt der Trenneinrichtung Bilder zu;

eine Halteeinrichtung hält das vom Stapel abgetrennte Einzelbild in einem der Rahmenteile, während der Reststapel im andern Rahmenteil gehalten wird;

eine Leiteinrichtung führt das abgetrennte Einzelbild so, daß es auf die andere Seite des Reststapels gelangt.

Die bekannten Bildwechsler verwenden einunddasselbe Element sowohl als Zufuhreinrichtung als auch als Halteeinrichtung für das Einzelbild, doch ist dies wegen der unterschiedlichen Funktionen ungünstiger, als wenn man für jede der genannten Funktionen ein eigenes System verwendet.

Aufgabe der vorliegenden Erfindung ist es, ausgehend von dem eingangs genannten Stand der Technik, eine Halteeinrichtung zu schaffen, die den bei Fotoabzügen vorliegenden Bedingungen besonders gut angepaßt ist. Die hinter der Trenneinrichtung freiwerdende Kante des abzutrennenden Blattes kann nämlich, wenn es sich um Fotoabzüge handelt, einerseits wegen des dünnen Materials Verwerfungen und Wölbungen aufweisen, andererseits können infolge der physikalisch-chemischen Eigenschaften der Fotopapiere besonders starke Trennkräfte erforderlich sein.

Gemäß der Erfindung werden zur Lösung dieser Aufgabe bei einer Vorrichtung mit den Merkmalen des Oberbegriffs des Patentanspruchs 1 die in seinem kennzeichnenden Teil genannten Merkmale vorgesehen.

Demgemäß wird in vorteilhafter Weise von der Tatsache Gebrauch gemacht, daß hinter der Trenneinrichtung die führende Kante des abgetrennten Blattes allseitig zugänglich ist und daher für die Übertragung auch großer Kräfte festgehalten werden kann. Dieses Festhalten erweist sich als sicher auch dann, wenn die Kante verworfen und gewölbt ist, und sorgt dafür, daß auch kein Verrutschen in der Blattebene eintreten kann. Ein weiterer Vorteil ist, daß räumlich gesehen das Zufuhrsystem auf der einen Seite der Trenneinrichtung, das Haltesystem auf dessen anderer Seite angeordnet sein können, so daß keine Probleme dadurch entstehen können, daß ein gleichzeitig Zufuhr- und Halteeinrichtung bildendes Bauteil die Trenneinrichtung "durchqueren" muß.

Es ist anzumerken, daß die erfindungsgemäße Halteeinrichtung neben dieser eigentlichen Funktion auch noch zumindest einen Teil der Funktionen der Leiteinrichtung übernehmen kann. So kann sie das Einzelbild noch zumindest während eines Teils der Rückbewegung der Rahmenteile in seiner Lage sichern, so daß es sich zum Beispiel nicht in seiner eigenen Ebene verdrehen kann.

Ausführungsbeispiele des Gegenstandes der Erfindung werden nachstehend unter Bezugnahme auf die beigefügten Zeichnungen im einzelnen erläutert.

Zunächst wird ein in Fig. 1 bis 5 gezeigtes Ausführungsbeispiel detailliert erläutert. Ein weiteres Ausführungsbeispiel ist in den Figuren 6 bis 13 gezeigt und wird ebenfalls detailliert beschrieben. Die Figuren 14 bis 26a und 45 bis 47 zeigen, weitgehend schematisiert, Konzeption, Alternativen und Details der gesteuerten zangenartigen Halteeinrichtung. Mit dieser können unterschiedlich gestaltete Zufuhrsysteme zusammenwirken, die in den Fig. 27 bis 44 weitgehend schematisiert gezeigt sind.

Die Darstellungsart der Figuren — Längs- oder Querschnitt, Draufsicht oder Teilperspektive etc. — ergibt sich für den Fachmann entweder von selbst oder ist bei der Figurenbeschreibung jeweils angegeben. Im übrigen kann der Fachmann die Figuren sinnvoll aus den ersten beiden Ausführungsbeispielen ergänzen.

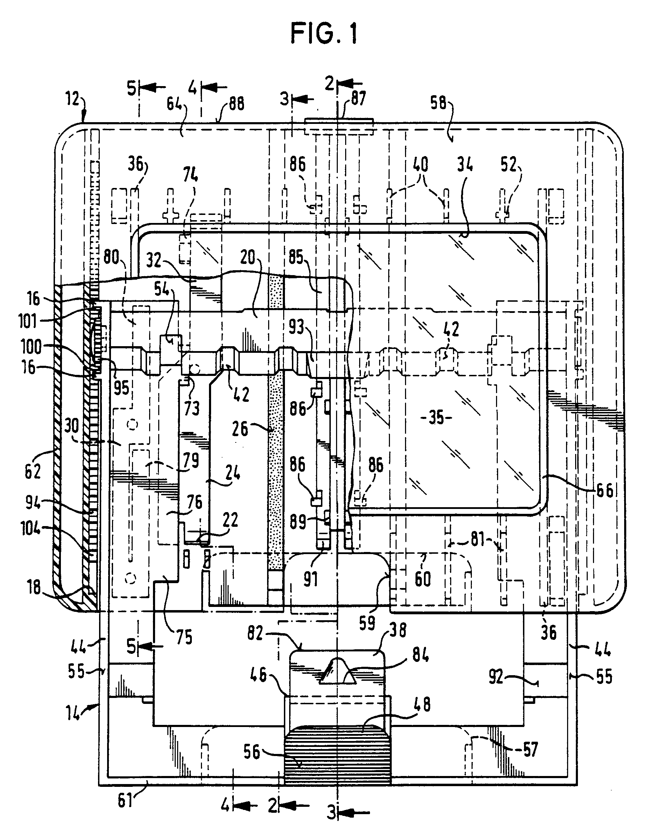

Die Figuren 1 bis 5 beziehen sich auf ein erstes Ausführungsbeispiel, das nachstehend im Zusammenwirken aller Bauelemente detailliert beschrieben wird.

Fig. 1 zeigt in teilweise geschnittener Draufsicht eine Vorrichtung gemäß der Erfindung. Das erste Rahmenteil ist als Gehäuse 12 ausgebildet, das zweite Rahmenteil ist ein Schieber 14, der aus dem Gehäuse um einen durch Anschläge 16 am Schieber und Gegenanschläge 18 am Gehäuse begrenzten Hub herausziehbar und wieder einschiebbar ist. Die Trenneinrichtung wird von einem Separatorsteg 20 gebildet. Die Zufuhreinrichtung wird von Haken 22 verkörpert, die an Blattfederarmen 24 sitzen. Die Halteeinrichtung zum Halten des Reststapels im Schieber wird ebenfalls von dem Separatorsteg gebildet, während das abgetrennte Einzelbild im Gehäuse einerseits das Zusammenwirken von im Gehäuse stationär angeordneten, mit einem Haftbelag 26 versehenen Schienen mit das Einzelbild gegen sie klemmenden, durch den Kontakt mit diesen zum Umlauf angetriebenen Rollen 28 gebildet wird; andererseits sind von der Bewegung der Rahmenteile gesteuerte Haltemittel vorgesehen.

Schließlich wird die Leiteinrichtung durch Paare von Blattfedern 30 sowie mit den Federarmen 24 einstückig ausgebildete Federarme 32 verkörpert.

Die Federarme 24 und 32 drücken im eingeschobenen Zustand des Schiebers den Blattstapel (in Fig. 1 nicht gezeigt) gegen ein Sichtfenster 35, dessen innere Kontur mit 34 bezeichnet ist. Das dann im Stapel oberste Blatt, im Bestimmungsfalle ein Fotoabzug, soll dann möglichst plan liegen; zu diesem Zweck ist es an seinem Umfang in einer Ebene abgestützt, die definiert ist durch seitliche Rippen 36, die Unterseite eines Griffstück-Schiebeteils 38 und, auf der ihm gegenüberliegenden Seite, durch an das Gehäuse angeformte Rippen 40.

Fig. 1 zeigt die teilausgezogene Position des Schiebers 14. Im eingeschobenen Zustand liegt der Separatorsteg jenseits dieser Rippen 40; da er aber weiter zum Fenster 34 vorsteht, das dem Niveau dieser Rippen entspricht, weist er für den Vorbeigang derselben Einschnitte 42 auf.

Die Abstützung der Kanten des Stapels erfolgt seitlich (d.h. parallel zur Auszugsrichtung) durch Holme 44 des Schiebers. Frontseitig, das heißt auf der Seite des Schiebers, die beim Auszug am weitesten vom Gehäuse entfernt ist, wird die Abstützung der Kanten durch die Anschlagfläche 46 eines mittig angeordneten Griffstücks 48 sowie durch seitliche Anschlagflächen 50 am Schieber bewirkt. Am gegenüberliegenden Ende stützen sich die Kanten der Fotos an an dem Gehäuse angeformten Anschlägen 52 ab, für die der Separatorsteg ebenfalls Durchlaß-Ausnehmungen 54 aufweist, die jedoch wesentlich tiefer sind als die für die Rippen 40.

Die Rippe 36 reicht weiter in das Innere des Schiebers hinein, als dem Niveau entspricht, das von der Oberkante 55 der Schieberholme definiert ist, so daß die Fotos nicht seitlich nach außen über die Schieberholme gleiten können. Die entsprechende Wirkung tritt zwischen Separatorsteg einerseits, Rippen 40 andererseits ein.

Das Griffstück 48 hat eine auf der Fensterseite des Gehäuses liegende Oberplatte 56 und eine Unterplatte 57, die breiter ist als die Oberplatte; die das Fenster rahmenartig umgebende Deckwand 58 des Gehäuses weist im Bereich der Oberplatte einen Ausschnitt 59 auf, während die gegenüberliegende Gehäusewandung für die Unterplatte 57 komplementär bei 60 eingetieft ist. Demgemäß hat die Vorrichtung im geschlossenen Zustand eine in sich geschlossene, im wesentlichen rechteckige Kontur ohne vorstehende Teile.

Das Gehäuse und der Schieber sind Kunststoff-Spritzteile. Der Schieber ist ein einteiliges Element, bestehend aus Holmen, Separatorsteg, Griffstück und einer das Griffstück mit den Holmen — die L-förmigen Querschnitt besitzen — verbindenden Stirnwand 61.

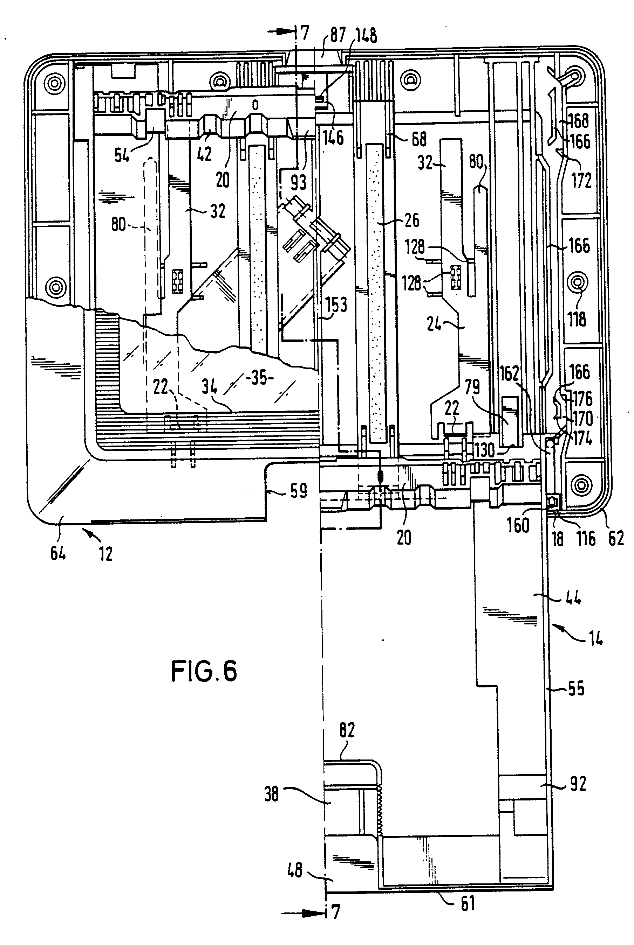

Das Gehäuse ist aus drei Teilen zusammengesetzt: Der Unterschale 62 mit Gehäuseboden 63, der rahmenartigen Oberschale 64 mit Fensterausschnitt, und dem in dieses eingesetzten Fenster 35. Das Gehäuse ist in Richtung der Schieberbewegung dadurch versteift, daß die Streben zwischen Deck- und Bodenwandung als Doppelträger ausgeführt sind, wie in Fig. 6 erkennbar. Die Gehäuseteile können miteinander verschweißt sein, oder man kann eine Schnappverbindung vorsehen.

Das Fenster 35 weist rings um seine Hauptfläche einen schmalen, nach außen etwas vorstehenden Rand 66 auf, so daß es gegenüber dem ihn umgebenden Rahmen etwas vorsteht. Eine zur Kontur dieses Randes komplementäre Eintiefung ist auf der Außenseite der gegenüberliegenden Bodenwandung mit 67 bezeichnet und erlaubt das Übereinanderstapeln mehrerer Gehäuse.

Beim Herausziehen des Schiebers aus dem Gehäuse wird dieser mit einer Hand an Ober- und Unterplatte des Griffstücks erfaßt, während die andere Hand das Gehäuse hält. An den frontseitigen — also dem Separatorsteg abgewandten — Kanten der auf den Federarmenden liegenden Fotos greifen die Haken 22 an, wodurch eine gewisse Anzahl von Fotos — je nach der Höhe der Haken — der Trenneinrichtung zugeführt wird. Diese stellt sich letztlich als ein Durchlaßspalt dar, der einerseits von (im Ausführungsbeispiel) zwei an den Gehäuseboden innen angeformten Stufen 68, andererseits von der ihnen zugewandten Unterseite von Schuhen 69 begrenzt wird, die in den Separatorsteg eingesetzt sind.

Zu jeder Stufe 68 gehört ein Schuh 69, und jedes System Stufe/Schuh ist beidseits der Symmetrieebene 70 der Vorrichtung angeordnet. Die Schuhe sind im Separatorsteg längsgeführt, mit einem Schneidenlager abgestützt und von einer eingelegten Drahtfeder 71 vorgespannt. In jedem Schuh ist außerdem ein Röllchen um eine zur Auszugsrichtung senkrechte Achse drehbar aufgenommen, und das Röllchen 28 ragt etwas aus dem Schuh heraus.

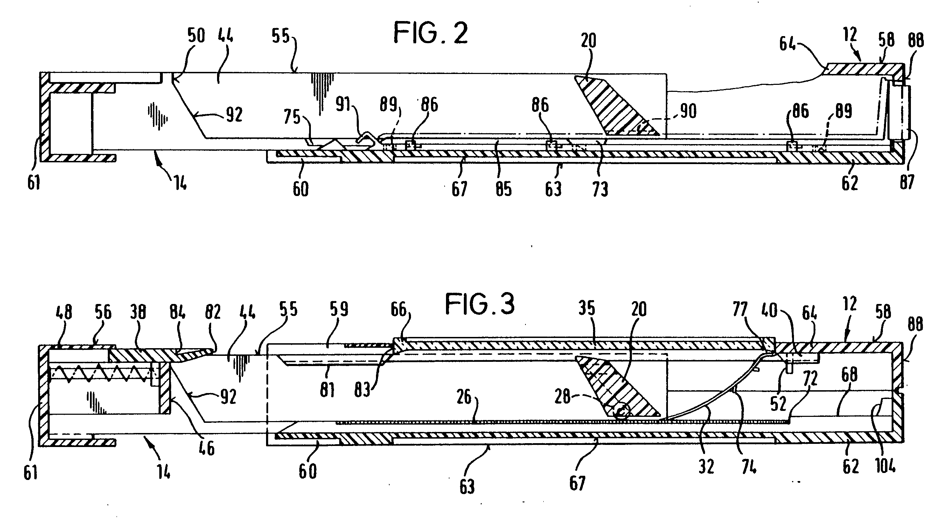

In Fig. 3 erkennt man die Lage der Stufen 68, die um reichlich die Dicke eines Fotoabzugs weiter über das Gehäusebodenniveau hinaussteht als die Oberfläche des Haftbelages 26. In der Ruhestellung des Schiebers liegt der unterste Abschnitt der Schuhe ein Stück weiter von der Kante 72 der Stufe entfernt, und die dem Stapel zugekehrte Fläche des Separatorstegs ist keilartig abgeschrägt derart, daß bei Auflaufen des Separators auf die Stapelkante die Fotos, an deren gegenüberliegender Kante die Haken 22 angreifen, längs der Schräge abwärts "wandern", in Richtung auf die ihnen zugekehrte Kante 72 der Stufen. Nur gerade die führende Kante eines einzigen Fotos hat zwischen den Schuhen 69 und den Haftbelag 26 soviel Platz, daß dieses im Stapel unterste Foto in den sich bildenden Spalt zwischen Schuhen 69 und Haftbelägen 26 eintreten kann, solange dieser Spalt von der Stufe 68 offengehalten wird. Alle anderen, vom Haken 22 mitgeführten Fotos stoßen an den Separator selbst oder an dessen Schuhe an mit der Folge, daß die Haken von deren Endkante abrutschen.

Wenn die in Auszugsrichtung hinteren Kanten der Schuhe 69 die Kante 72 der Stufen 68 passiert haben, senken sich die Schuhe unter der Wirkung der Drahtfeder, wobei die Rollen 28 sich auf das so abgetrennte einzelne Foto setzen und dieses auf die zugeordneten Haftbeläge pressen, wodurch es im Gehäuse — also dem ersten Rahmenteil — festgehalten wird. Der Reststapel wird vom Separator zusammen mit dem Schieber nach außen mitgenommen, bis dieser ganz ausgezogen ist.

Dabei ist zu beachten, daß die Federarme 32 ja auch vom Separatorsteg überlaufen werden. Damit sie während des Durchlaufs ihrer am Stapel angreifenden Enden nicht das abgetrennte Bild von unten belasten, werden sie während einer bestimmten Phase des Auszugshubes mechanisch in Richtung Gehäuseboden gedrückt. Hierzu dienen an die Schieberholme 44 angeformte Kufen 73, die seitlich von den Federarmen auskragende Ansätze 74 überstreichen und die Arme entsprechend ihrer Länge auf einem Teilhub halten. Weitere Kufen 75 an den Schieberholmen laufen auf die Federarme 24 an der Verbreiterung 76 auf, sobald das Einzelfoto zwischen Haftbelag und Rollen sicher geklemmt ist, und drücken diese Arme ebenfalls vom Sichtfenster weg, so daß man ungehindert weitere Fotos einfüllen, andere entnehmen kann.

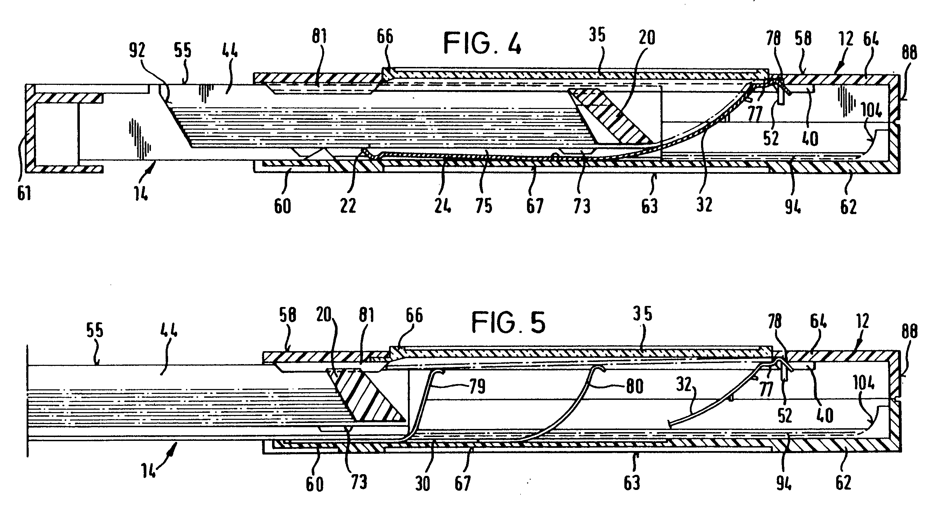

Auf der dem Stapel abgewandten Seite des Separators werden die Federarme 32 nach kurzem Hub wieder freigegeben, so daß sie wieder unter das vereinzelte Foto greifen und dessen hintere Kante allmählich in Richtung Fenster führen Schließlich legt sich diese Kante unter der Wirkung der Federn an die Gehäuseoberseite an. Da die freien Enden der Federarme abgerundet sind, andererseits aber diese Kante sicher an der erreichten Position festgeklemmt werden soll, ist an den Federarmen noch ein kurzes Stück geradlinig ausgebildet, in Fig. 4 mit 77 bezeichnet. Das abgerundete Federarmende findet dabei Platz in einer Ausnehmung auf der Innenseite der Gehäusedeckwand, in Fig. 5 mit 78 bezeichnet. Die Federarme 32 bilden so mit der Gehäusedeckwand eine Zangenanordnung zum Halten der abgetrennten Blätter, während des restlichen Schieberauszugs.

Die beiden Haken 22, die beiden Schuhe 69, die Haftbeläge 26 und die Federarme 32 sind sämtlich jeweils symmetrisch bezüglich der Mittelebene der Gesamtvorrichtung angeordnet, und die beiden Haken 22 liegen so genau wie möglich auf einer zu dieser Symmetrieebene senkrechten Linie. Das hat zur Folge, daß das zu wechselnde Foto auch dann ohne Verdrehung den Wechselvorgang durchläuft, wenn es wegen Untermaß nicht an den Schieberholmen geführt ist. Die Abmessungstoleranzen von Fotos sind nämlich bei gleicher Nenngröße unterschiedlich in Quer- und Längsrichtung: Da in den Entwicklungsanstalten die Papiere von Rollen recht genau eingehaltener Breite verarbeitet werden, die dann auf unterschiedliche Länge geschnitten werden, ist es bevorzugt, in Richtung der Schieberbewegung das Fotomaß vorzusehen, das enger toleriert ist.

Das abgetrennte Einzelbild, das bis jetzt an seiner einen Kante eingeklemmt gehalten beschrieben worden ist, wird als ganzes in Richtung Fenster gehoben. Hierzu dienen die schon erwähnten Blattfedern 30 mit frontseitigen Armen 79 und rückseitigen Armen 80, die — wie in Fig. 5 deutlich erkennbar — das Einzelfoto so halten und abstützen, daß es beim Schieberrückhub wieder auf den Stapel gelangen kann. Im geschlossenen Zustand der Vorrichtung und während des Auszugshubes des Schiebers — zumindest während des ersten Teils desselben — sind die Federarme 79, 80 von den Holmen des Schiebers in entsprechende Nuten des Gehäusebodens gedrückt.

Zu Beginn des Rückhubs des Schiebers ist das Einzelfoto von den Federarmen 32 vor den an das Gehäuse angeformten Anschlägen 52 eingeklemmt und wird in Richtung Separatorsteg an vier Stellen von den Federarmen 79, 80 abgestützt. Die dem Separatorsteg zugekehrte andere Querkante des Fotos kann nach unten durchhängen; die ihr zugekehrte Seite des Separators ist jedoch keilförmig abgeschrägt, so daß die Kante allmählich gehoben wird, wenn der Separatorsteg auf sie zuläuft. Zwischen der Oberkante des Separatorstegs und der Gehäusedeckwand ist ein Spalt, der für den Durchlaß des Fotos reichlich bemessen ist. Der Gefahr, daß das Foto auf die ihm zugekehrt liegenden Kanten des vom Schieber mitgeführten Reststapels aufstößt, wird dadurch begegnet, daß die Gehäusedeckwand innen Niederhaltenocken 81 aufweist, die den Stapel unter dem Niveau der Separatoroberseite halten. Diese Niederhaltenocken stehen ausgefluchtet mit den Rippen 40, so daß sie durch die entsprechenden Ausschnitte 42, 54 des Separatorsteges passen.

Das Griffstück-Schiebeteil 38 ist gleitbeweglich im Griffstück aufgenommen und steht unter Federvorspannung in Richtung Gehäuse, wie in Fig. 3 gut erkennbar. Beim Einschub des Schiebers trifft seine freie Kante 82 auf einen im Gehäuse vorgesehenen Anschlag 83, wodurch er in das Griffstück zurückgedrückt wird und nicht in den durch das Gehäusefenster sichtbaren Raum ragt. Nach dem Herausziehen hingegen sichert er die im Schieber liegenden Fotos gegen Herausfallen. Zum Wechseln der Fotos kann er von Hand zurückgedrückt werden, was durch Fingerknöte 84 erleichtert wird. Man kann die Fotos von der Unterseite des Schiebers her, zwischen die Holme greifend, herausdrücken oder neben dem Griffstück von oben hineinfassen.

Bei dem insoweit beschriebenen Vorgang bleibt immer das abgetrennte Foto im Gehäuse zurück. Es ist nicht oder nicht ohne weiteres möglich, dieses aus der Vorrichtung zu entnehmen. Um den Stapel, auch wenn dieser nur aus einem Bild besteht, entnehmen zu können, ist daher eine besondere Einrichtung vorgesehen.

Im Gehäuse ist eine Steuerbrücke 85 verschieblich aufgenommen, gehalten von an das Gehäuse angeformten Klammern 86. Die Brücke trägt einen Steuerknopf 87, der die Rückwand 88 des Gehäues durchsetzt und geringfügig über die Wechslerkontur vorsteht. Bei Fingerdruck auf den Knopf läuft die Brücke auf Keile 89 am Gehäuseboden auf und wird dadurch in Richtung Fenster gehoben. Die Breite der Brücke paßt gerade in einen entsprechenden Ausschnitt 90 im Separator und versperrt, auf dem gesamten Auszugshub des Schiebers, den Durchlaßspalt der Trenneinrichtung, so daß jedes in der Vorrichtung befindliche Bild mit dem Schieber heraustransportiert werden muß. Nahe der äußeren Endstellung des Schiebers überläuft dessen Separatorsteg eine hochstehende Nase 91 der Brücke, die nach unten ausfedert; wird der Schieber jetzt wieder eingeschoben, drückt der Separatorsteg zuerst die Brücke in ihre Ausgangsstellung zurück, ehe er unter erneuter Auslenkung der Nase 91 frei zurückführbar ist.

Wie oben erwähnt, sollen die Fotos durch die geschilderten Mittel im Abstand von der Fensterscheibe gehalten werden, damit diese bei den Wechselvorgängen nicht in Berührung mit der Bildoberfläche gelangt, wodurch Kratzschäden auftreten würden. Die Gefahr besteht jedoch gleichwohl, weil die Fotos nicht (immer) eben sind, sondern in aller Regel eine Wölbung entweder in Längs- oder in Querrichtung aufweisen. Bei Wölbung in Längsrichtung genügen die auf dem gesamten Auszugshub wirksamen Rippen 36. Im anderen Falle hingegen ist zwar das Griffstück-Schiebeteil wirksam, doch der gegenüberliegende Abschnitt des Separatorsteges wäre kaum in der Lage, die erheblichen Spannungen aufzunehmen, die in einem dickeren Stapel gleichartig gewölbter Fotos entstehen.

Deshalb sind zusätzlich folgende Maßnahmen getroffen:

Unterhalb der Anschlagflächen 50 weist die Schieberfrontwand nahe den Holmen Schrägflächen 92 auf, die im wesentlichen parallel der gegenüberliegenden Separatorschräge sind. Die Fotos liegen also schräg gestaffelt zwischen Separator und Schrägflächen, wodurch ein Großteil der Spannungen im Stapel auf die Gesamtfläche des Separators verteilt wird. Außedem ist in der Mitte des Separatorsteges eine Erhöhung 93 vorgesehen, die die Restspannung derjenigen Fotos aufnimmt, die an den zu ihrer Kante senkrechten Anschlagflächen 50 abgestützt sind.

Wenn der Benutzer einmal begonnen hat, die Wechselbewegung durchzuführen, so muß diese ganz zuende gebracht werden, um die Vorrichtung in die Ausgangsposition zu bringen. Man kann also nicht den Schieber halb herausziehen und dann wieder einstoßen. Dies wird durch ein Richtungsgesperre bewirkt. An das Gehäuse ist eine Zahnstange 94 angespritzt, mit der ein Zahnrad 95 kämmt, welches einstückig mit seiner Welle 96 ausgebildet ist. Die Welle sitzt in einem zur Zahnstange parallelen Langloch im Schieberholm 44, in das es mittels eines sich am Gehäuse abstützenden Blattfederchens, angespritzt am Zahnrad, eingedrückt gehalten wird.

Das Langloch ist durch eine Rippe in zwei Teile unterteilt, in denen die Welle 96 nur noch wenig seitliches Spiel hat. Schließlich sind beidseits des Langlochs an den Schieber Sperrnasen 100, 101 angeformt, die in der Ebene des Zahnkranzes des Zahnrads liegen und mit ihren Spitzen in diesen eingreifen können.

Es ist wichtig anzumerken, daß zwar auf dem ersten Teil des Schieberauszugshubes die Halteeinrichtung von den Rollen 28 im Zusammenwirken mit den Haftbelägen 26 verkörpert wird, daß aber auf dem letzten Teil des Hubes, vor Erreichen der äußeren Endposition, die Federarme 32, indem sie das Einzelfoto festklammern, als zangenartige Halteeinrichtung wirken.

Wie aus der vorhergehenden Erläuterung entnehmbar ist, wird jedes umgeschichtete Blatt während des gesamten Umschichtzyklus niemals freigegeben, sondern an mindestens zwei Punkten erfaßt und damit gegen Verdrehung gesichert. Es ist somit stets unter Kontrolle, hier mit achssymmetrischen Mitteln.

Die stapelparallelen Schenkel der Schieberholme, auf denen sich beim Umschichten das vereinzelte Blatt abstützt, dürfen voneinander höchstens einen solchen Abstand haben, daß ein kurzes Foto, das mit einer Kante gerade an einem dazu senkrechten Holmschenkel anliegt, von dem gegenüberliegenden Holm an der anderen Kante noch gehalten wird.

Wie oben erwähnt, hat die Vorrichtung das Sichtfenster in der Oberschale des Gehäuses. Die Abmessung des Fensters ist dann in Richtung quer zur Bewegungsrichtung höchstens so groß, daß das kürzestmögliche Foto, auch wenn es außermittig liegt, sich nicht mit seiner Kante im Sichtfeld präsentiert. Entsprechendes gilt für die Rippen 36, und ganz dieselben Überlegungen treffen auch zu auf die Federarme 79 und 80 und überhaupt für alle an den Blattflächen angreifenden Bauteile.

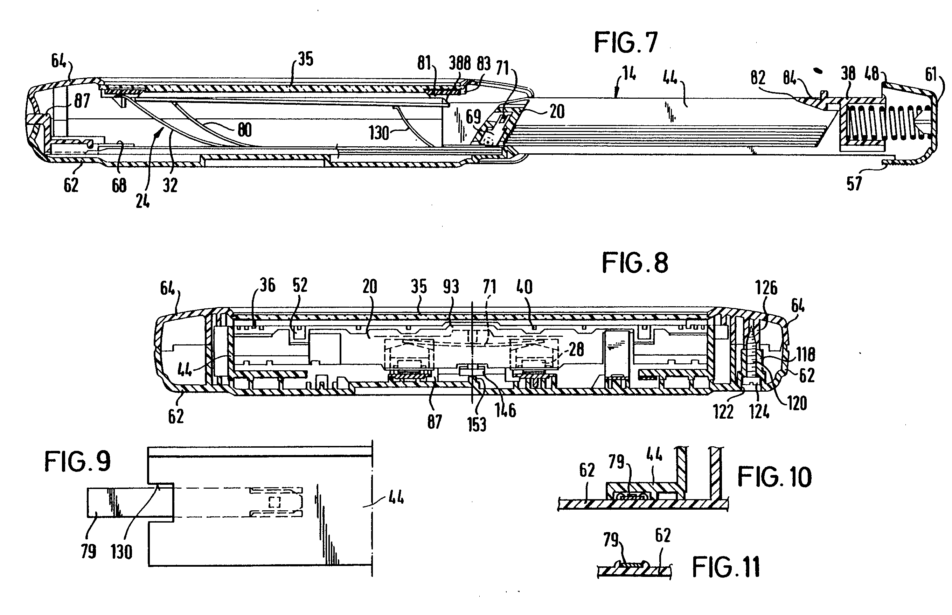

In Fig. 6 bis 8 ist die Ausführungsform in ihrer Gesamtheit dargestellt.

Im Gehäuse 12 ist der Schieber 14 verschieblich aufgenommen; Gehäuse 12 bildet das erste Rahmenteil, Schieber 14 das zweite. Der Auszugshub ist durch ein an einen der Schieberholme 44 angeformtes Lagerauge 116, das auf einen gehäuseseitigen Anschlag 18 aufläuft, begrenzt. Das Gehäuse ist aus einer Oberschale 64 und einer Unterschale 62, deren Außenränder formschlüssig ineinandergreifen, zusammengeschraubt, und zwar in dem Bereich zwischen den Schieberholmen 44 und den zu ihnen parallelen Außenkanten des Gehäuses. Hierfür weist jeweils die Unterschale angeformte Führungshülsen 118 für Schraubenschäfte 120 sowie außenseitige Einsenkungen 122 für Schraubenköpfe 124 auf, während die Oberschale dazu koaxial angeformte Kernloch-Hülsen 126 trägt, in die die Schrauben ihr Gewinde selbst schneiden. In die Oberschale 64 ist das Fenster 35 eingeklipst, und die unter seinen äußeren Randbereichen liegenden Teile der Oberschale sind dadurch nicht sichtbar, daß diese Bereiche des Fensters mattiert sind. In Fig. 6 ist die Kontur des mittleren, transparenten Fensterabschnitts mit 34 markiert.

Funktionell bestehen wenig Unterschiede gegenüber dem Ausführungsbeispiel nach Fig. 1 bis 5, so daß es genügt, nur die markanten Abweichungen zu erläutern.

Hier sind die Federarme 24, 32 und 80 zu einem Stanzund Biegeteil zusammengefaßt und mittels Nocken 128 positioniert und kalt festgebördelt. Dagegen sind die Federarme 79 gesonderte Bauteile, die mittels angeformter Nocken an der Unterschale positioniert und kalt festgebördelt werden. Damit dieser Federarm das vereinzelte Bild möglichst frühzeitig hochheben kann, weist der zugehörige Schieberholm 44 Ausschnitte 130 auf. Das sichere Festhalten des vereinzelten Bildes ist während dieser Phase des Wechselzyklus durch die Federarme 80 gewährleistet, die die dem Schieber abgewandte Endkante des Bildes klammerartig nach oben drücken.

Der Haftbelag 26 kann unter Umständen das vereinzelte Bild so sehr festhalten, daß die Kraft der Federarme 79 nicht ausreicht, um die dem Schieber zugewandte Bildkante zu heben, so daß man Hilfsfedern vorsehen kann, um diese Kante zusätzlich vom Haftbelag abzudrücken.

Die Stege 134 bilden zugleich die Führung für die in der Symmetrieebene angeordnete Taste 87. Die Taste 87 trägt einen auf den Separatorsteg 20 hin gerichteten Fortsatz 146 mit einer Kerbe 148, zu der komplementär ein Doppelkeil an der Unterseite des Separatorsteges 20 ist. Drückt man nun bei festgehaltenem Schieber auf die Taste 87, so federt ihr Fortsatz 146 nach unten aus, bis der Doppelkeil in die Kerbe 148 einrastet. Die vom Fortsatz 146 nach unten ragende Sperrnase blokkiert nun die Trenneinrichtung für die Kante des untersten Bildes im Stapel, so daß bei Zug am Schieber die Haken 22 auch von der Kante dieses Bildes abgleiten, wenn wenn der Separatorsteg zusammen mit der Taste 87 auf die ihm zugewandte Stapelkante einwirkt und den Stapel mitnimmt. Hierbei verhindert eine Rippe 153 ein Ausrasten des Fortsatzes 146, der auf der Rippe 153 entlangläuft. Nahe der äußeren Endposition des Schiebers 14 trifft die Sperrnase auf einen Einschnitt in der Rippe 153, während die Tastenführungslappen auf einen Anschlag auflaufen. Der Fortsatz kann demgemäß nach unten ausfedern, wenn der Schieber weitergezogen wird, und sich so vom Separator lösen. Beim Wiedereinschub des Schiebers 14 ist die Taste lose beweglich, so daß der Doppelkeil sie einfach vor sich her schiebt, bis sie ihre Endposition wieder erreicht hat.

Oben wurde bereits auf die Richtungswechsel-Sperre hingewiesen. Beim vorliegenden Ausführungsbeispiel sind ebenfalls Sperren vorgesehen, die jedoch nur in den "kritischen" Phasen des Wechselzyklus wirken.

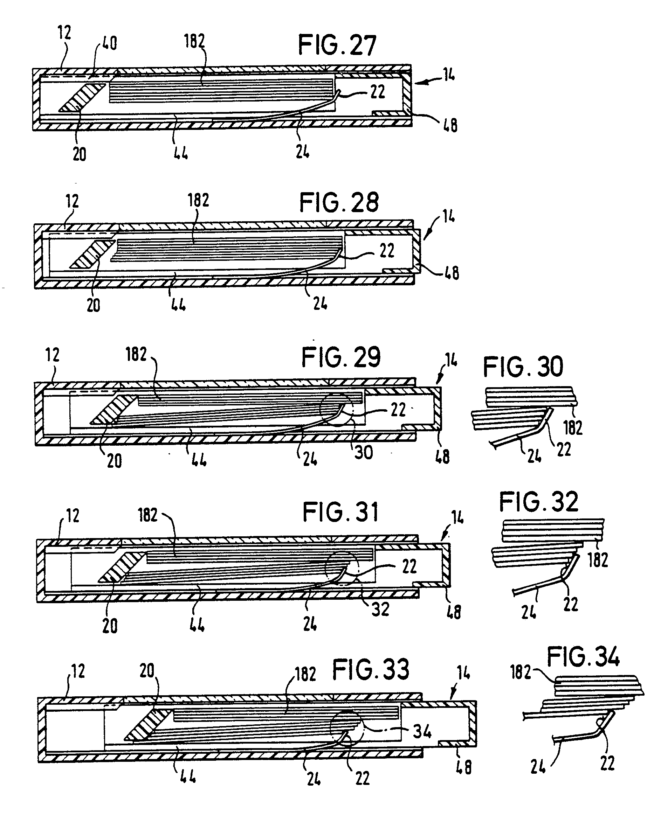

Im Lagerauge 116 des Schiebers 14 ist um einen Zapfen 160 schwenkbar eine Steuerklinke 162 angeordnet, die mit einem Steuernocken 164 längs Kanälen geführt ist, die durch an die Unterschale 62 angeformte Führungsschienen 166 definiert sind, so daß der Steuernocken 164 den in Fig. 27 mit Pfeilen markierten Pfaden beim Einschub bzw. beim Auszug folgen muß. Während des größten Teils des Wechselzyklus kann man ungehindert die Bewegungsrichtung umkehren, nicht jedoch dann, wenn sich der Steuernocken 164 während des Einschubs im Kanalabschnitt 168 bzw. während des Auszugs im Kanalabschnitt 170 befindet. Im ersteren Falle würde, wenn man kurz vor der inneren Endstellung des Schiebers diesen wieder herausziehen will, der Steuernokken auf den Anschlag 172 auflaufen; im letzteren Falle, wenn also kurz vor Erreichen der äußeren Endstellung der Schieber wieder eingeschoben wird, stößt der Steuernocken entweder auf den Anschlag 174 oder auf die Anschlagkante 176. Es ist anzumerken, daß der Zapfen 160 mit hinreichender Reibung im Lagerauge sitzt, daß die Steuerklinke zwar den Führungsstegen ohne merkbare Behinderung folgen, nicht aber frei pendeln kann.

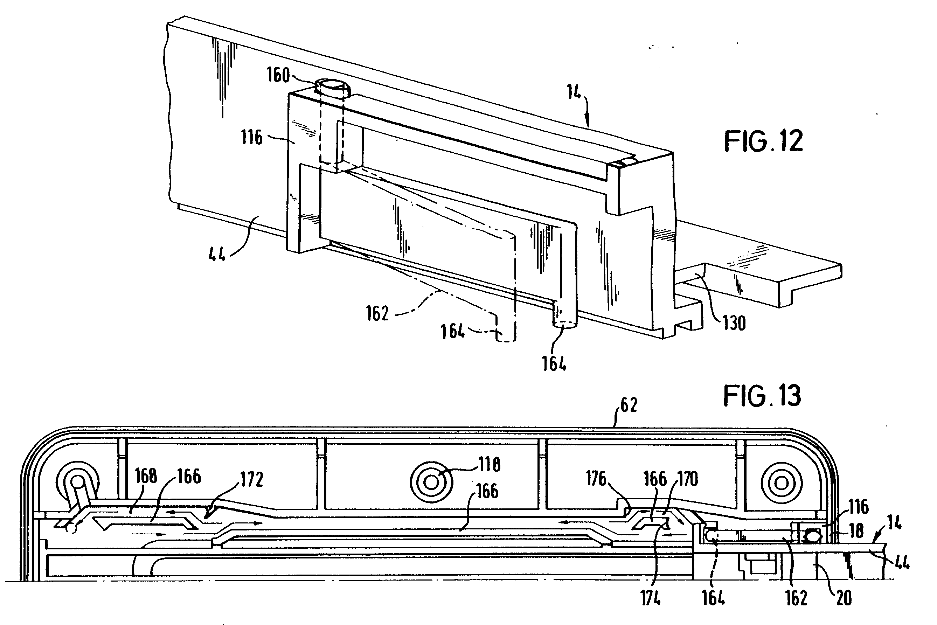

Aus den vorstehenden Erläuterungen läßt sich entnehmen, daß als zangenartige Halteeinrichtung jeweils die Federarme 32 mit der Gehäusedeckwand zusammenwirkt; im Ausführungsbeispiel nach Fig. 6 bis 13 kommt noch eine zweite zangenartige Klammer dazu, gebildet von den Federarmen 80 im Zusammenwirken mit der Gehäusedeckwand.

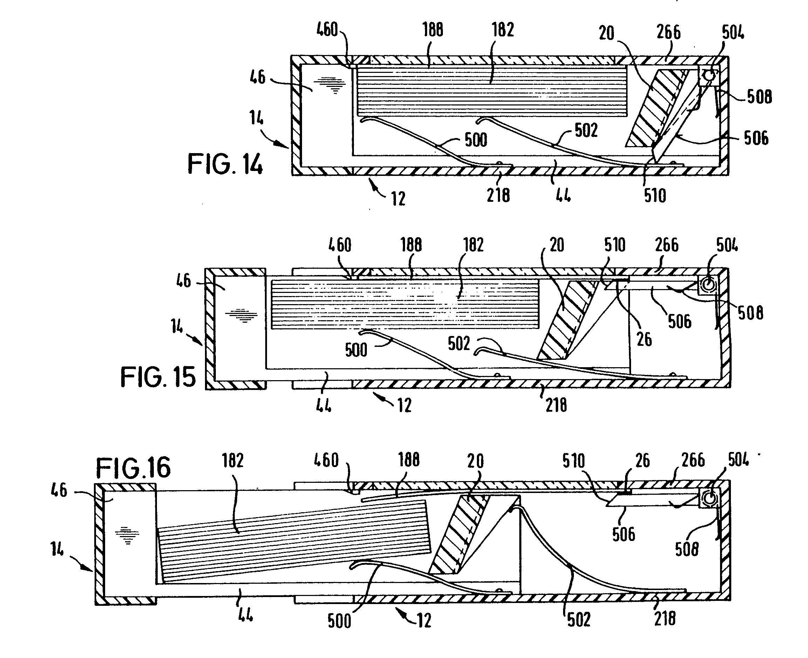

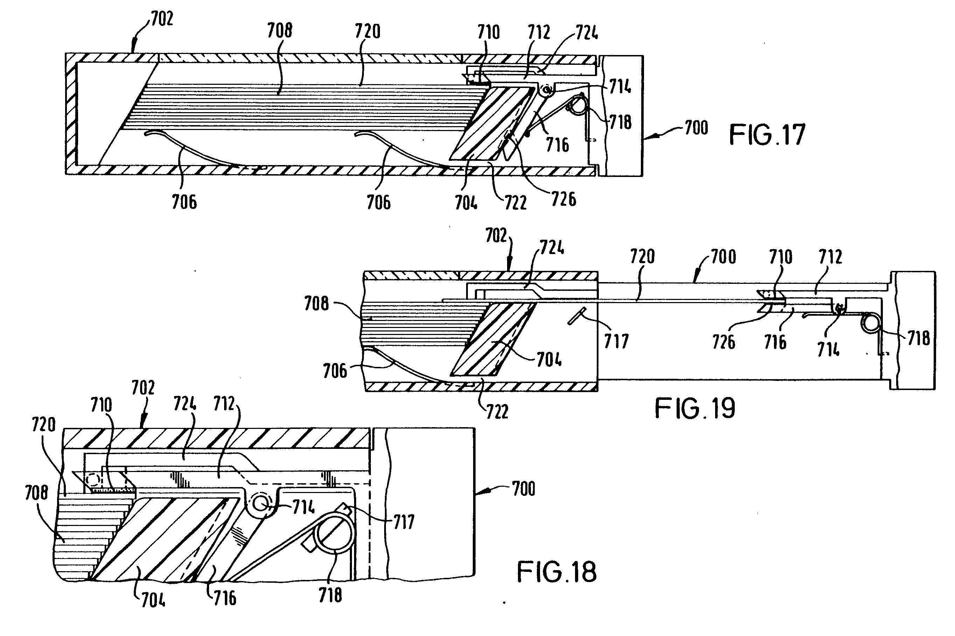

Die Fig. 14 bis 26 zeigen zunächst, in Fig. 14 bis 16, das Grundprinzip einer Haltezange. Die Figuren 17 bis 26 stellen Abwandlungen und Details dar.

In Fig. 14 bis 16 ist das erste Rahmenteil als Gehäuse 12 ausgebildet, das zweite Rahmenteil als Schieber 14. An der Deckwand des Gehäuses 12 ist ein Mitnehmer in Form einer Leiste oder eines Hakens 460 angebracht, zum Beispiel angeformt, und die Längsholme 44 des Schiebers sind einerseits durch dessen Frontblocks 46, andererseits durch einen Separatorsteg 20 quer miteinander verbunden. An der Gehäusebodenwand 268 ist eine erste Andruckfeder 500 befestigt, die das dem Schieberfrontblock 46 nähere Ende des Stapels 182 an die Gehäusedeckwand drückt. — die z.B. ein Sichtfenster aufweisen kann —, und eine zweite Andruckfeder 502 ist ebenfalls am Gehäuseboden befestigt und drückt den Stapel nahe seinem dem Separatorsteg zugekehrt liegenden Ende nach oben.

Auf der dem Stapel abgewandten Seite des Separatorstegs ist um eine Achse 504 schwenkbar ein Hebel 506 angelenkt, der von einer Feder 508 in die in Fig. 15 dargestellte Position vorgespannt ist. Die Schrägfläche 510 am freien Ende des Hebels 506 gelangt beim Einschub des Schiebers in das Gehäuse in Kontakt mit der ihm zugekehrten Seite des Separatorstegs und wird durch die Keilwirkung nach unten gedrückt in die in Fig. 14 dargestellte position. Die der Gehäusedeckwand zugewandte Seite des Hebels 506 trägt nahe ihrem freien Ende einen Haftbelag 26.

Die Vorrichtung arbeitet wie folgt:

Wenn, ausgehend von der Ruheposition nach Fig. 14, der Schieber 14 aus dem Gehäuse 12 herausgezogen wird, trifft der Mitnehmer 460 auf die ihm zugekehrt liegende Kante des abzutrennenden Blattes 188 und schiebt dieses in Richtung Separatorsteg. Dies ist dann möglich, wenn der Stapel von der Feder 500 hinreichend kräftig in Anlage an der Deckwand gehalten wird. Sobald der Separator sich auswärts bewegt beginnt der Hebel 506 unter der Wirkung seiner Vorspannfeder nach oben zu schwenken, wobei dies deshalb störungsfrei geschehen kann, weil die ihm zugekehrt liegende Seite des Separatorstegs im Bereich des Haftbelags eine entsprechend eingetiefte Bahn (gestrichelt angedeutet) aufweist.

Sobaldder Hebel die in Fig. 15 angedeutete position erreicht hat, klemt er das Blatt 188 gegen die Gehäusedeckwand; wie insbesondere in Fig. 16 erkennbar, ist nämlich der Mitnehmer nicht in der Lage, den gesamten Hub über das Blatt am Gehäuse festzuhalten, weil die Feder 500, auf die der Separatorsteg aufläuft, nach unten gedrückt wird, so daß das in Förderrichtung hintere Ende des Stapels lose wird. Auf der dem Stapel abgewandten Seite des Separatorstegs ist dieser noch mit Keilabschnitten 512 versehen, deren Neigung so bemessen ist, daß beim Wiedereinschub des Schiebers die Federenden der Feder 502 nach unten gedrückt werden und unter dem Separator hindurchgleiten können.

Fig. 17 bis 19 zeigen in weitgehend schematisierter seitlich gesehener Schnittdarstellung ein weiteres Ausführungsbeispiel mit den Rahmenteilen in der zusammengeschobenen Ruheposition. Das erste Rahmenteil hat die Form eines Schiebers 700, der aus dem zweiten Rahmenteil in Form eines Gehäuses 702 herausziehbar ist. Im Gehäuse ist stationär die Trenneinrichtung in Form eines Separatorstegs 704 vorgesehen, und eine ebenfalls stationär im Gehäuse angeordnete Federanordnung 706 drückt den Stapel 708 nach oben. Die dem Separatorsteg nächstliegende Endfläche des obersten Blattes liegt unter einem Haftbelag 710, der auf einer ersten Zangenbacke 712 angeordnet ist. Diese Backe ist an dem Schieber elastisch nach oben auslenkbar angeformt. Sie trägt ferner ein Gelenk 714, an dem eine zweite Backe 716 angelenkt ist, die in der Ruheposition auf der dem Stapel abgewandten Seite des Separators, durch Auflaufen auf Kurve 717, entgegen der Vorspannung einer Feder 718, nach unten gedrückt worden ist.

Zieht man jetzt den Schieber aus dem Gehäuse heraus, so nimmt der Haftbelag das oberste Blatt 720 des Stapels, das von der Federanordnung 706 in Anlage an ihm gehalten wird, mit über den Separatorsteg. Zugleich kommt die zweite Backe 716 vom Steg 704 frei und schließt sich unter Wirkung der Vorspannfeder 718, bis das vom Haftbelag mitgenommene Blatt zwischen den Zangenbacken fest eingeklemmt liegt. Beim Zurückschieben gelangt die dem Separator zugekehrte Kante des Blattes 720 vor den fußseitigen Durchlaß 722 der Trenneinrichtung, und die Zange schiebt es durch diesen Durchlaß, bis sie wieder vermittels Kurve 717 geöffnet wird. Damit der Haftbelag nicht über die Oberseite des Separatorsteges schleift, wenn die erste Backe ihn überläuft, wird sie längs einer Steuernut 724 an ihm vorbeigeführt und springt dann wieder in Arbeitsposition.

Auch die zweite Backe kann mit einem Haftbelag 726 versehen sein, doch ist dann die ihr zugewandte Seite des Separatorstegs mit einer eingetieften Nut — gestrichelt angedeutet — zu versehen, damit auch dort kein unmittelbarer Kontakt des Haftbelages stattfinden kann.

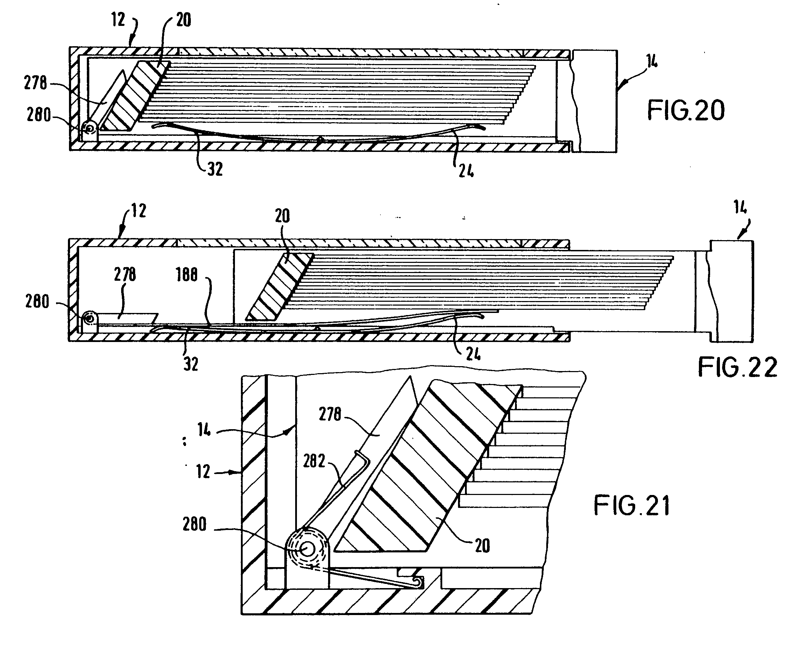

Fig. 20 und 22 zeigen im Längsschnitt den Ruhezustand bzw. den teilweise herausgezogenen Zustand einer Vorrichtung gemäß der Erfindung, bei der das erste Rahmenteil von einem Gehäuse 12 und das zweite von einem Schieber 14 gebildet sind. Man erkennt eine Federanordnung 24/32 und den Separatorsteg 20 als Trenneinrichtung.

Zu Beginn des Auszugshubes des Schiebers führt die Zufuhreinrichtung das im Gehäuse unterste Blatt 188 unter dem Separatorsteg durch, hinter dem eine schwenkbare Backe 278 um ein Gelenk 289 drehbar angeordnet ist. Eine Feder 282 spannt die Backe 278 in die in Fig. 22 gezeichnete Position vor, wie man der vergrößerten Darstellung nach Fig. 21 entnimmt. Der Separatorsteg hat die Backe bei eingeschobenem Schieber in die inaktive.

Position infolge Keilwirkung beim Auflaufen umgelegt. Die Freigabe der Backe kann automatisch beim Auszug erfolgen, doch ist dies nicht im einzelnen dargestellt.

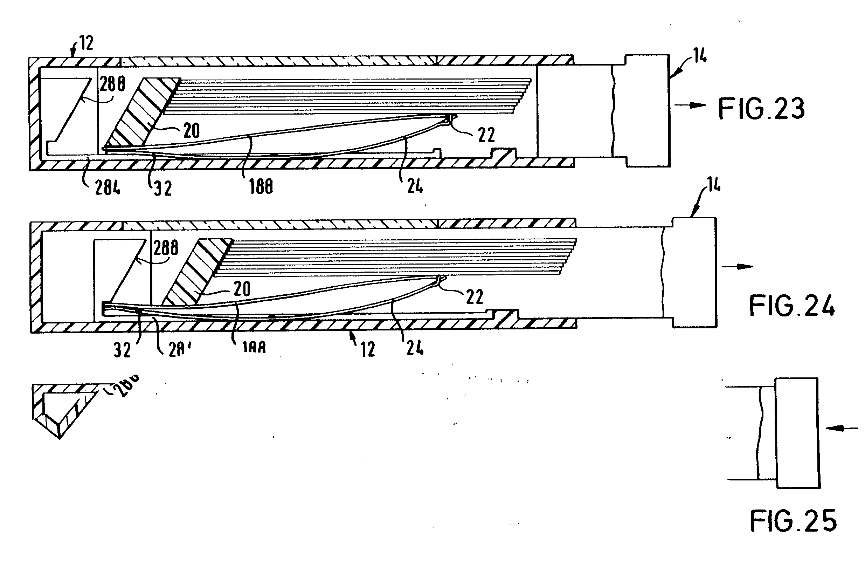

Fig. 23, 24 und 25 zeigen im schematisierten Längsschnitt drei Phasen des Auszugshubes bei einer weiteren Ausführungsform. Die Zufuhr des abzutrennenden Blattes erfolgt mittels des Mitnehmers, nämlich des Hakens 22, der an dem Federarm 24 sitzt. Gehäuse, Schieber und Separatorsteg entsprechen den vorher geschilderten Ausführungen. Der als zweites Rahmenteil dienende Schieber 14 koppelt sich nach einer gewissen Auszugslänge mit einem Bügel 284, der längsverschieblich in dem das erste Rahmenteil bildenden Gehäuse 12 angeordnet ist. An dem Bügel ist eine Einsenkung 286 unterhalb einer Leitfläche 288 angeformt.

Sobald der Mitnehmer, infolge eines ersten Hubes des Schiebers, die führende Kante des abzutrennenden Blattes 188 unter dem Separator 20 durchgeschoben hat, beginnt der Schieber auch, nun gekoppelt mit dem Bügel 284, diesen in Auszugsrichtung mitzunehmen, mit der Folge, daß diese Kante des abgetrennten Blattes in die Einsenkung 286 gelangt und dort von dem Arm 32 der Federanordnung festgeklemmt wird. Dieser Federarm bildet eine Backe einer Zangenanordnung, und die auf der anderen Seite der festgeklemmten Kante des Blattes befindliche Randfläche der Einsenkung bildet die andere Backe der Zangenanordnung. Dieser Zustand bleibt, bis die hintere Kante des abgetrennten Blattes vom Separator freikommt. Schiebt man nun den Schieber wieder ein, so nimmt er den Bügel 284 wieder mit einwärts in das Gehäuse, wobei die Einsenkung vom abgezogenen Blatt freikommt, so daß der freie Arm 32 der Federanordnung die von ihm abgestützte Kante des Blattes längs der Leitfläche 288 ruckfrei nach oben gleiten läßt.

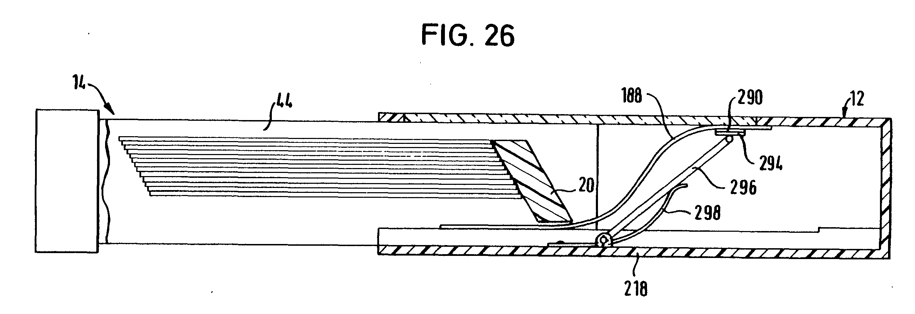

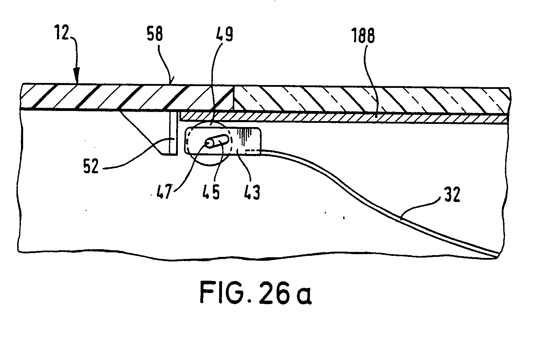

Fig. 26 stellt eine Abwandlung der Zangenanordnung dar: Der Haftbelag 290 befindet sich auf einer Andruckanordnung, bestehend aus einer den Haftbelag tragenden Platte 294, die gelenkig am Ende eines Hebels 296 sitzt. Der Hebel ist an den Gehäuseboden 218 angelenkt. Eine Feder 298 drückt den Haftbelag an das vereinzelte Bild.

Fig. 26a zeigt, weitgehend schematisiert und in gegenüber Fig. 3 erheblich vergrößertem Maßstab ein Detail einer modifizierten Halteklammer am Ende des Federarms 32. Die beiden Federarme 32 sind mit seitlichen Lappen 43 versehen, in die ein Langloch 45 eingebracht ist. In diesem ist ein Lagerzapfen 47 einer Klemmrolle 49 aufgenommen, die das Einzelblatt 188 umso fester hält, je mehr an ihm — vom Separatorsteg 20 — gezogen wird, da das Langloch entsprechend schräg verläuft.

Die beschriebenen zangenartigen Haltemittel können wahlweise mit einer Zufuhreinrichtung kombiniert werden, wie sie in den Fig. 27 bis 47 dargestellt und nachstehend erläutert wird.

Die Fig. 27 bis 34 zeigen die Wirkungsweise der bevorzugten Zufuhreinrichtung, Alternativen und Details derselben.

Fig. 27 bis 34 stellen zunächst das Prinzip dar. Man erkennt in Fig. 27 das erste Rahmenteil in Form des im wesentlichen rechteckigen Gehäuses 12, in dem gleitbeweglich der Schieber 14 als zweites Rahmenteil aufgenommen ist. Die Trenneinrichtung ist nur symbolisch als Separatorsteg 20 angedeutet. Der Stapel gleichformatiger Blätter ist mit 182 bezeichnet.

Der Schieber 14 umfaßt ein Griffstück 48, an dem die in Bewegungsrichtung vordere Kante des Stapel anliegt, sowie neben dem Separatorsteg die zwei Längsholme 44. Zwischen den Längsholmen ragen vom Boden des Gehäuses 12 die Elemente der Zufuhreinrichtung nach oben. Die zwei Blattfedern 24 sind mit einem Ende am Gehäuse festgelegt; das andere Ende weist die an der Stapelkante anliegende Schrägfläche 22 auf (siehe auch Fig. 30, 34). Demgemäß ist in den Federn 24 die Schrägfläche mit der Vorspannfeder baulich vereinigt.

Wird nun der Schieber aus dem Gehäuse herausgezogen, was in Fig. 27 bis 34 für den Beginn des Wechselzyklus dargestellt ist, so legt sich zunächst die Schrägfläche 22, welche im Ruhezustand nach Fig. 27 noch in den Bereich des Griffstücks 48 hineinragt, an die Stapelkante an (Fig. 28). Beim weiteren Herausziehen des Schiebers aus dem Gehäuse gehen die im Stapel obersten Blätter, die deshalb als Block gezeichnet sind, mit dem Schieber mit, während die im Einwirkbereich der Schrägfläche liegenden Blätter gebremst werden, bis der Separatorsteg 20 auf ihre gegenüberliegende Kante auftrifft (Fig. 29).

Auf die Blätter wird nun von beiden Kanten her einwärts wirkend ein Druck ausgeübt, einerseits von dem Separatorsteg, andererseits von der Schrägfläche der Zufuhreinrichtung. Die Schrägfläche kann aber nach unten ausweichen infolge der Elastizität der Federn 24, wobei die Schrägfläche an den Kanten der über dem untersten Blatt liegenden Blätter nacheinander abgleitet. Auf das unterste Blatt hingegen wirkt vom Separatorsteg her keine oder nur eine wesentlich geringere Bremskraft, so daß bei richtiger Abstimmung der Schräglage der Schrägfläche 22 und der Vorspannung der Federn 24 die von der in Blattlängsrichtung wirkenden Komponente der Federvorspannung aufgebrachte Kraft genügt, das unterste Blatt unter dem Separatorsteg durchzuschieben. Dabei wird auch die zwischen benachbarten Blättern wirkende Haftkraft überwunden, die bei der Auslegung des Systems eine erhebliche Rolle spielt.

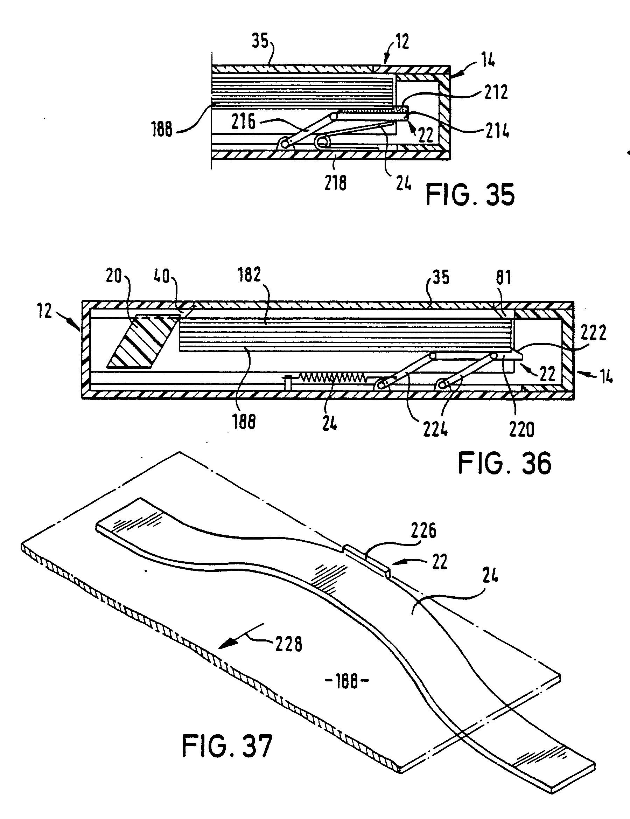

Fig. 35, 36 und 37 zeigen weitere Ausgestaltungen von Zufuhrsystemen.

In Fig. 35 ist der Mitnehmer 22 von einem kompressiblen Belag 212 auf einer Trägerplatte 214 gebildet, die mittels Lenker 216 am Boden 218 eines der Rahmenteile angelenkt ist. Eine Schenkelhalsfeder 24 drückt den Mitnehmer in Anlage an die hintere Kante des abzutrennenden Blattes 188.

Gemäß Fig. 36 ist der Mitnehmer 22 als eine Platte 220 ausgebildet, die mit einer hochstehenden Leiste 222 die hintere Kante des abzutrennenden Blattes 188 hintergreift. Die Vorspannanordnung umfaßt eine Schraubenzugfeder 24, die irgendwo stationär eingehangen ist und an eine Parallelogrammgestängeanordnung 224 angreift, an die die Mitnehmerplatte angelenkt ist. Auf diese Weise ist der Mitnehmer unabhängig von der Stapeldicke parallel zu seiner Hauptebene gehalten.

Gemäß Fig. 37 ist der Mitnehmer 22 ein Fortsatz 226, abgewinkelt von einer Blattfeder 24, die sich quer zu der durch den Pfeil 228 symbolisierten Bewegungsrichtung des abzutrennenden Blattes 188 erstreckt; auch hie ist der Mitnehmer im wesentlichen immer in derselben Wirkungsposition bezüglich der Blattkante unabhängig von der Zahl der Blätter im Stapel.

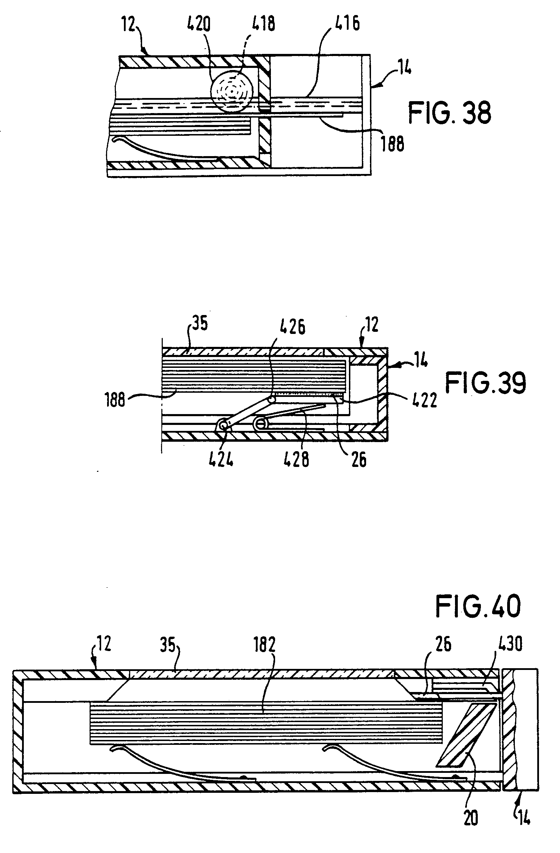

Fig. 38 bis 47 zeigen, weitgehend schematisiert, unterschiedliche weitere Zufuhrsysteme nach anderen Prinzipien.

Gemäß Fig. 38 weist das erste Rahmenteil eine angeformte Zahnstange 416 auf, mit der ein im zweiten Rahmenteil drehbar gelagertes Ritzel 418 kämmt und bei der Relativbewegung eine Mitnehmerwalze 420 antreibt, die das zu vereinzelnde Blatt 188 reibungsschlüssig mitnimmt.

Fig. 39 zeigt eine Ausführungsform mit einer Platte 422, die einen Haftbelag 26 trägt, der das an ihm anliegende Blatt reibungsschlüssig mitzunehmen in der Lage ist. Die flächige Anlage wird durch die Aufhängung der Platte über ein erstes Gelenk 424 und ein zweites Gelenk 426 sowie eine Vorspannfeder — hier eine Schenkelhalsfeder 428 — sichergestellt.

Fig. 40 stellt eine Ausführungsform dar, bei der ebenfalls die Zuführeinrichtung mittels eines Haftelementmitnehmers arbeitet. Hier ist das erste Rahmenteil als Schieber, das zweite Rahmenteil als Gehäuse ausgebildet. Am Schieber 14 ist ein Haftelementmitnehmer 26 angeordnet, der das zu vereinzelnde Blatt vom Stapel 182 abzieht und der Trenneinrichtung zuführt, die hier einfach als Separatorsteg 20 gezeichnet ist. Im zweiten Rahmenteil (also dem Gehäuse 12) ist eine Steuerkulisse 430 ausgebildet, längs der der Haftelementmitnehmer über den Separatorsteg ohne Kontakt mit diesem hinweggeführt wird.

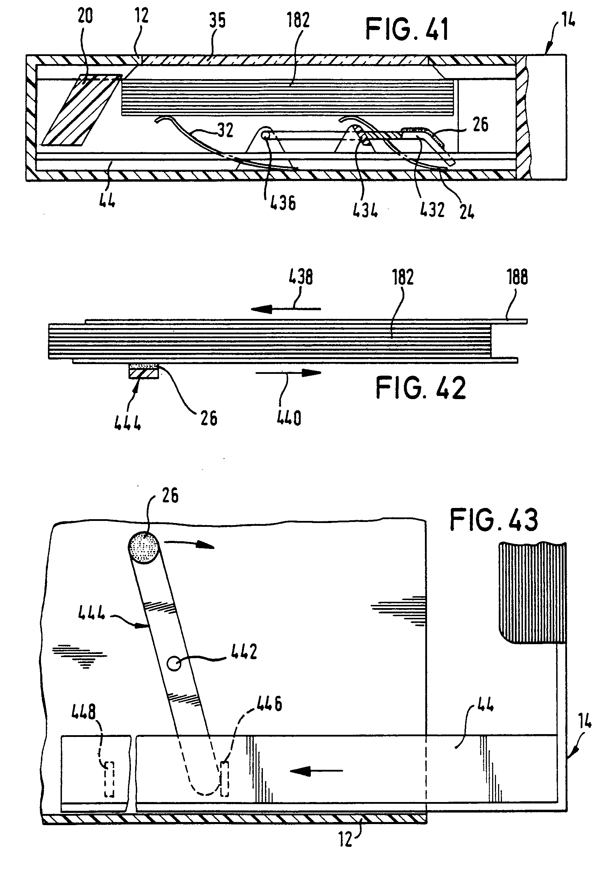

In Fig. 41 ist angedeutet, wie ein Haftmitnehmer 26, nahe dem freien Ende eines Hebels 432 angeordnet, durch Auflaufen einer Steuerschräge 434 am zweiten Rahmenteil (Schieber 14) um seinen Anlenkpunkt 436 am ersten Rahmenteil (Gehäuse 12) in Anlage an das ihm zugewandt liegende Blatt des Stapels verschwenkt wird und so auf einem Teilhub der Relativbewegung dieses Blattes der Trenneinrichtung zuführt, symbolisiert durch den Separatorsteg 20.

Fig. 42 zeigt in schematischer Seitenansicht, Fig. 43 in Teilschnitt-Draufsicht eine Zufuhreinrichtung, die nicht erst zu Beginn eines Auszugshubes der Rahmenteile wirksam wird, sondern bereits beim letzten Einwärts-Teilhub des vorhergehenden Wechselvorgangs.

Während also das Einzelblatt 188 auf einer Seite dem Stapel 182 wieder zugeführt wird — Pfeil 438 — wird auf seiner anderen Seite — Pfeil 440 — das nächste Blatt schon in Bewegung gesetzt. Hierfür weist das erste Rahmenteil einen bei 442 angelenkten Hebel 444 mit einem Haftmitnehmer 26 auf, der durch Auflaufen von Anschlägen 446 bzw. 448 nahe den jeweiligen relativen Endpositionen des zweiten Rahmenteils umgelegt wird und dabei das Blatt entsprechend der Relativbewegung der beiden Rahmenteile mitnimmt.

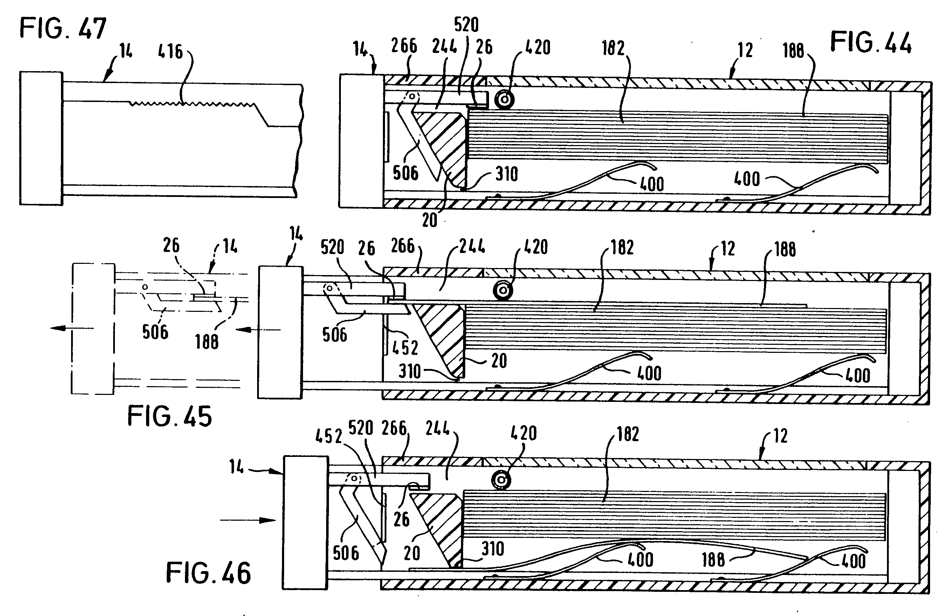

Fig. 44 zeigt im schematisierten Längsschnitt ein letztes Zufuhrsystem, während die Fig. 45 bis 46 einzelne Phasen des Wechselzyklus darstellen. Fig. 47 illustriert den Antrieb der Rolle.

Man erkennt in Fig. 44 das erste Rahmenteil in Form eines Schiebers 14, der relativ zu dem zweiten Rahmenteil, das als Gehäuse 12 ausgebildet ist, verschieblich ist. Die Trenneinrichtung umfaßt den Separatorsteg 20 und weitere Bauteile gemäß Fig. 1 bis 5. Die Federn 400 drücken den Stapel 182 nach oben.

Am Schieber ist eine Zahnstange 416 angeformt (Fig. 47), die mit einem Ritzel auf der Rollenwelle (nicht gezeigt) kämmt. Dadurch wird die Rolle zu einer Umfangsgeschwindigkeit angetrieben, die gleich ist der Relativgeschwindigkeit zwischen beiden Rahmenteilen. Die Rolle 420 ist mit einem die Reibung an den Fotos erhöhenden Belag versehen, und da der Stapel von den Federn gegen die Rolle gedrückt wird, fördert die Rolle beim Auszug des Schiebers aus dem Gehäuse das ihm zugekehrt liegende Blatt ein Stück weit durch den Durchlaßspalt 244 zwischen Separatorsteg und Gehäusedeckwand 266. Die Rolle ist in Lagern des Gehäuses drehbar.

Am Schieber ist ein Mitnehmerelement in Form eines Haftbelags 26 vorgesehen, der im Zusammenwirken mit einem Gegenelement 450 die führende Kante des von der Rolle angeförderten Blattes erfaßt, sobald das Gegenelement, das zunächst durch Auflaufen auf den Separatorsteg nach unten weggeklappt worden war, von diesem Steg freikommt und unter Wirkung einer Vorspannfeder (nicht gezeigt) nach oben auf den Haftbelag zu schwenkt.

Das Blatt wird dann zwischen Haftbelag und Gegenelemnt zangenartig gefaßt. Die Rolle wirkt demgemäß als Zufuhreinrichtung, die beschriebene Zange als Halteeinrichtung.

Wie Fig. 46 erkennen läßt, läuft beim Rückhub des Schiebers das Einzelblatt 188 durch den unteren Durchlaß 310 des Separatorstegs, und ein Rastorgan 452 klappt das Gegenelement rechtzeitig ab, damit die nachschleppende Blattkante für den Durchlauf durch den Durchlaß freikommt.

**Patentansprüche**

1. Vorrichtung zum zyklischen Umschichten eines Stapels (182) rechteckiger Blätter mit einem ersten Rahmenteil (12) und einem zweiten, relativ zu dem ersten hin- und herbeweglichen Rahmenteil (14), wobei die Bewegung parallel zur Stapelhauptebene erfolgt, sowie mit Mitteln, die beim Auseinanderbewegen der Rahmenteile ein Einzelblatt (188) an einer Stapelseite abnehmen und beim Zusammenführen der Rahmenteile an der andern Stapelseite wieder zufügen, welche Mittel umfassen:
eine Trenneinrichtung (20, 266) zum Abtrennen des Einzelblattes vom Stapel,
eine Zufuhreinrichtung (460) zum Zuführen von Blättern zu der Trenneinrichtung,
eine erste Halteeinrichtung zum Halten des abgetrennten Einzelblattes im ersten Rahmenteil,
eine zweite Halteeinrichtung (20) zum Halten des Reststapels im zweiten Rahmenteil, und
eine Leiteinrichtung (32, 288) zum Führen des abgetrennten Einzelblattes auf die andere Stapelseite,
dadurch gekennzeichnet, daß die erste Halteeinrichtung eine Zangenanordnung umfaßt mit einem ersten, relativ zu dem Einzelblatt (188) verlagerbaren Zangenglied (506), das sich auf dessen vor seiner Abtrennung dem Reststapel zugekehrte Seite legt un dessen andere Seite an ein zweites, im ersten Rahmenteil (12) angeordnetes Zangenglied (266) preßt, und daß Mittel (20, 508) für die Steuerung der Verlagerung des ersten Zangengliedes in Abhängigkeit von der Relativbewegung der Rahmenteile vorgesehen sind.

2. Vorrichtung nach Anspruch 1, dadurch gekennzeichnet, daß die mit dem Einzelblatt in Kontakt tretende Fläche mindestens eines der Zangenglieder einen Haftbelag (290) aufweist.

3. Vorrichtung nach Anspruch 1, dadurch gekennzeichnet, daß das erste Zangenglied (278) schwenkbeweglich ist.

4. Vorrichtung nach Anspruch 1, dadurch gekennzeichnet, daß das erste Zangenglied (278) als starre Backe ausgebildet ist.

5. Vorrichtung nach Anspruch 1, dadurch gekennzeichnet, daß das erste Zangenglied elastisch ist.

6. Vorrichtung nach Anspruch 1, dadurch gekennzeichnet, daß das zweite Zangenglied (266) am ersten Rahmenteil (12) ausgebildet ist.

7. Vorrichtung nach Anspruch 6, dadurch gekennzeichnet, daß das zweite Zangenglied (266) eine Wandung des ersten Rahmenteils (12) ist.

8. Vorrichtung nach einem der vorangehenden Ansprüche, gekennzeichnet durch eine Federanordnung (282) zum Vorspannen der Zangenglieder in eine ihrer Endpositionen.

9. Vorrichtung nach Anspruch 8, dadurch gekennzeichnet, daß das erste Zangenglied (278) in eine seiner Endpositionen federvorgespannt ist.

10. Vorrichtung nach Anspruch 9, dadurch gekennzeichnet, daß das erste Zangenglied (278) in die Festhalteposition federvorgespannt ist.

11. Vorrichtung nach einem der Ansprüche 8 bis 10, dadurch gekennzeichnet, daß die Zangenglieder in die Festhalteposition federvorgespannt sind und durch die Steuermittel (11) entgegen der Federvorspannung in die Freigabestellung bringbar sind.

12. Vorrichtung nach einem der vorangehenden Ansprüche, dadurch gekennzeichnet, daß die Steuermittel am zweiten Rahmenteil angeordnet sind.

13. Vorrichtung nach Anspruch 1 oder 12, dadurch gekennzeichnet, daß die Steuermittel eine Steuerkurve umfassen.

14. Vorrichtung nach Anspruch 1, dadurch gekennzeichnet, daß die Steuermittel ein relativ zu beiden Rahmenteilen bewegliches Steuerorgan (284) umfassen.

15. Vorrichtung nach einem der vorangehenden Ansprüche, dadurch gekennzeichnet, daß die Zangenanordnung (284, 288) so ausgebildet und angeordnet ist, dass die Kante des Einzelblattes in eine Sollposition für die Rückführung gebracht wird.

16. Vorrichtung nach Anspruch 15, dadurch gekennzeichnet, daß die Zangenanordnung ein Element der Leiteinrichtung umfasst, welches die Einzelblattkante im wesentlichen senkrecht zur Bewegungsrichtung der Rahmenteile führt.

17. Vorrichtung nach Anspruch 15 oder 16, dadurch gekennzeichnet, daß die Zangenanordnung einen Anschlag zur Positionierung des Einzelblattes bildet.

18. Vorrichtung nach einem der vorangehenden Ansprüche, dadurch gekennzeichnet, daß die Zangenanordnung an der führenden Querkante des Einzelblattes angreifend angeordnet ist.

19. Vorrichtung nach Anspruch 18, dadurch gekennzeichnet, daß die Zangenanordnung an mindestens zwei Punkten der Querkante wirksam ist.

20. Vorrichtung nach Anspruch 18, dadurch gekennzeichnet, daß die Zangenanordnung das Einzelblatt in Förderrichtung hinter der zweiten Halteeinrichtung erfaßt.

21. Vorrichtung nach einem der Ansprüche 1 bis 17, dadurch gekennzeichnet, daß die Zangenanordnung an mindestens einer auszugsparallelen Kante des Einzelblattes angreifend angeordnet ist.

22. Vorrichtung nach einem der vorangehenden Ansprüche, dadurch gekennzeichnet, daß die Zangenanordnung über dem gesamten Auszugsweg der Rahmenteile wirksam ist.

23. Vorrichtung nach einem den vorangehenden Ansprüche, dadurch gekennzeichnet, daß die Zangenanordnung erst nach einem Teilrückhub der Rahmenteile in die Blattfreigabeposition bringbar ist.

24. Vorrichtung nach einem der vorangehenden Ansprüche, dadurch gekennzeichnet, daß ein Teil der Zangenanordnung (710, 712) zugleich ein Element der Zufuhreinrichtung ist.

25. Vorrichtung nach Anspruch 24, dadurch gekennzeichnet, daß die Zufuhreinrichtung ein an der dem Reststapel abgewandten Seite des Einzelblattes angreifendes Haftelement (710) umfaßt.

26. Vorrichtung nach Anspruch 25, dadurch gekennzeichnet, daß das Haftelement (710) am zweiten Zangenglied angeordnet ist.

27. Vorrichtung nach einem der Ansprüche 1 bis 23, dadurch gekennzeichnet, daß als Zufuhreinrichtung ein am Einzelblatt in dessen in Förderrichtung hinterer Kante angreifender Mitnehmer (460) vorgesehen ist.

28. Vorrichtung nach einem der vorangehenden Ansprüche, dadurch gekennzeichnet, daß die Zangenanordnung ein Keilelement umfaßt, das sich mit dem Einzelblatt reibungsschlüssig verkeilt.

29. Vorrichtung nach Anspruch 28, dadurch gekennzeichnet, daß das Keilelement eine in Langlöchern gelagerte Rolle umfaßt.

30. Vorrichtung nach einem der vorangehenden Ansprüche, dadurch gekennzeichnet, daß eines der Rahmenteile ein Gehäuse mit einem Sichtfenster ist, aus welchem Gehäuse das andere Rahmenteil in Form eines Schiebers herausziehbar ist.

31. Vorrichtung nach Anspruch 30, dadurch gekennzeichnet, daß das erste Rahmenteil das Gehäuse bildet und das zweite Rahmenteil den Schieber.

32. Vorrichtung nach Anspruch 31, dadurch gekennzeichnet, daß das Einzelblatt auf der dem Sichtfenster abgewandten Stapelseite abgezogen wird.

33. Vorrichtung nach Anspruch 1, dadurch gekennzeichnet, daß das zweite Zangenglied am ersten Rahmenteil relativbeweglich zu diesem angeordnet ist.

34. Vorrichtung nach Anspruch 33, dadurch gekennzeichnet, daß das zweite Zangenglied von einer Feder in eine Endlage vorgespannt ist.

35. Vorrichtung nach Anspruch 3, dadurch gekennzeichnet, daß das erste Zangenglied um eine zur Rahmenteilbewegungsrichtung senkrecht verlaufende Achse schwenkbar ist.

36. Vorrichtung nach einem der vorangehenden Ansprüche, dadurch gekennzeichnet, daß das erste Zangenglied verschieblich relativ zum ersten Rahmenteil ist.

**37.** Vorrichtung nach Anspruch 36, dadurch gekennzeichnet, daß das erste Zangenglied in Richtung der Rahmenteilbewegung verschieblich ist.

## Revendications

**1.** Dispositif de reclassement cyclique d'une pile (182) de feuilles rectangulaires, comportant un premier élément en forme de cadre (12) et un second élément en forme de cadre (14) déplaçable en va-et-vient par rapport au premier élément en forme de cadre, le déplacement étant parallèle au plan principal de la pile, ainsi que des moyens qui, lors du déplacement des éléments en forme de cadres l'un par l'autre, prélèvent une feuille individuelle (188) sur un côté de la pile et, lors de la réinsertion des éléments en forme de cadre l'un dans l'autre, appliquent à nouveau cette feuille sur l'autre côté de la pile, lesquels moyens comprenant:

un dispositif de séparation (20, 266) servant à séparer une feuille individuelle de la pile,

un dispositif d'amenée (460) servant à amener des feuilles au dispositif de séparation,

un premier dispositif de maintien servant à maintenir la feuille individuelle séparée dans le premier élément en forme de cadre,

un second dispositif de maintien (20) servant à maintenir la pile restante dans le second élément en forme de cadre, et

un dispositif de guidage (32, 288) servant à envoyer la feuille individuelle séparée s'ur l'autre côté de la pile, caractérisé en ce que le premier dispositif de maintien comporte un dispositif en forme de pince possédant un premier organe (506), qui est déplaçable par rapport à la feuille individuelle (188) et s'applique sur la face de cette feuille, tournée vers la pile restante, avant sa séparation, et repousse l'autre face de la feuille contre un second élément (266) de la pince, disposé dans le premier élément en forme de cadre (12), et en ce qu'il es prévu des moyens (20, 508) servant à commander le déplacement du premier élément de la pince en fonction du déplacement relatif des éléments en forme de cadres.

**2.** Dispositif selon la revendication 1, caractérisé en ce que la surface qui vient en contact avec la feuille individuelle, d'au moins l'un des organes de la pince possède un revêtement adhésif (290).

**3.** Dispositif selon la revendication 1, caractérisé en ce que le premier organe (278) de la pince est monté pivotant.

**4.** Dispositif selon la revendication 1, caractérisé en ce que le premier organe (278) de la pince est réalisé sous la forme d'une mâchoire rigide.

**5.** Dispositif selon la revendication 1, caractérisé en ce que le premier organe de la pince est élastique.

**6.** Dispositif selon la revendication 1, caractérisé en ce que le second organe (266) de la pince est formé sur le premier élément en forme de cadre (12).

**7.** Dispositif selon la revendication 6, caractérisé en ce que le second organe (266) de la pince est une paroi d'un premier élément en forme de cadre (12).

**8.** Dispositif selon l'une des revendications précédentes, caractérisé par un dispositif à ressort (282) servant à précontraindre les organes de la·pince dans une de leurs positions d'extrémité.

**9.** Dispositif selon la revendication 8, caractérisé en ce que le premier organe (278) de la pince est précontraint par un ressort dans l'une de ses positions d'extrémité.

**10.** Dispositif selon la revendication 9, caractérisé en ce que le premier organe (278) de la pince est précontraint par un ressort dans la position de maintien ferme.

**11.** Dispositif selon l'une des revendications 8 à 10, caractérisé en ce que les organes de la pince sont précontraints par un ressort dans la position de maintien fixe et peuvent être amenés, par les moyens de commande (11) dans la position de libération à l'encontre de la précontrainte du ressort.

**12.** Dispositif selon l'une des revendications précédentes, caractérisé en ce que les moyens de commande sont installés sur le second élément en forme de cadre.

**13.** Dispositif selon la revendication 1 ou 12, caractérisé en ce que les moyens de commande comportent une came de commande.

**14.** Dispositif selon la revendication 1, caractérisé en ce que les moyens de commande comprennent un organe de commande (284) mobile par rapport aux deux éléments en forme de cadres.

**15.** Dispositif selon l'une des revendications précédentes, caractérisé en ce que le dispositif en forme de pince (284, 288) est agencé et disposé de telle sorte que le bord de la feuille individuelle est amené dans une position de consigne pour le renvoi.

**16.** Dispositif selon la revendication 15, caractérisé en ce que le dispositif en forme de pince comporte un élément du dispositif de guidage, qui guide le bord de la feuille individuelle sensiblement perpendiculairement à la direction de déplacement des éléments en forme de cadres.

**17.** Dispositif selon la revendication 15 ou 16, caractérisé en ce que le dispositif en forme de pince forme une butée permettant de positionner la feuille individuelle.

**18.** Dispositif selon l'une des revendications précédentes, caractérisé en ce que le dispositif en forme de pince est monté de manière à s'accrocher sur le bord transversal de guidage de la feuille individuelle.

**19.** Dispositif selon la revendication 18, caractérisé en ce que le dispositif en forme de pince agit en au moins deux points du bord transversal.

**20.** Dispositif selon la revendication 18, caractérisé en ce que le dispositif en forme de pince saisit la feuille individuelle en arrière du second dispositif de maintien, dans la direction d'entraînement.

**21.** Dispositif selon l'une des revendications 1 à 17, caractérisé en ce que le dispositif en forme de pince est disposé de manière à s'accrocher au moins sur un bord, parallèle à la direction d'extraction, de la feuille individuelle.

22. Dispositif selon l'une des revendications précédentes, caractérisé en ce que le dispositif en forme de pince agit sur l'ensemble de la course d'extraction des éléments en forme de cadres.

23. Dispositif selon l'une des revendications précédentes, caractérisé en ce que le dispositif en forme de pince peut être amené dans la position de libération de la feuille, uniquement après une course partielle des éléments en forme de cadres.

24. Dispositif selon l'une des revendications précédentes, caractérisé en ce qu'une partie du dispositif en forme de pince (710, 712) constitue simultanément un élément du dispositif d'amenée.

25. Dispositif selon la revendication 24, caractérisé en ce que le dispositif d'amenée comporte un élément adhésif (710), qui s'accroche au côté de la feuille individuelle, tournée à l'opposé de la pile restante.

26. Dispositif selon la revendication 25, caractérisé en ce que l'élément adhésif (710) est disposé sur le second organe de la pince.

27. Dispositif selon l'une des revendications 1 à 23, caractérisé par le fait qu'il est prévu, comme dispositif d'amenée, un organe d'entraînement (460) s'accrochant sur la feuille individuelle au niveau de son bord arrière, dans la direction d'entraînement.

28. Dispositif selon l'une des revendications précédentes, caractérisé en ce que le dispositif en forme de pince comporte un élément en forme de coin, qui s'applique en coin en réalisant une liaison de frottement, sur la feuille individuelle.

29. Dispositif selon la revendication 28, caractérisé en ce que l'élément en forme de coin possède un galet tourillonnant dans des trous allongés.

30. Dispositif selon l'une des revendications précédentes, caractérisé en ce que l'un des éléments en forme de cadres est un boîtier comportant un voyant et dont l'autre élément en forme de cadre peut être extrait sous la forme d'un tiroir.

31. Dispositif selon la revendication 30, caractérisé en ce que le premier élément en forme de cadre forme le boîtier et le second élément en forme de cadre forme le tiroir.

32. Dispositif selon la revendication 31, caractérisé en ce que la feuille individuelle est extraite sur le côté de la pile tournée à l'opposé du voyant.

33. Dispositif selon la revendication 1, caractérisé en ce que le second organe de la pince est disposé sur le premier élément en forme de cadre de manière à pouvoir se déplacer par rapport à ce dernier.

34. Dispositif selon la revendication 33, caractérisé en ce que le second organe de la pince est précontraint par un ressort dans une position d'extrémité.

35. Dispositif selon la revendication 3, caractérisé en ce que le premier organe de la pince peut pivoter autour d'un axe perpendiculaire à la direction de deplacement des éléments en forme de cadres.

36. Dispositif selon l'une des revendications précédentes, caractérisé en ce que le premier organe de la pince est mobile par rapport au premier élément en forme de cadre.

37. Dispositif selon la revendication 36, caractérisé en ce que le premier organe de la pince est déplaçable dans la direction de déplacement des éléments en forme de cadres.

## Claims

1. Device for the cyclic rearrangement of a pile of rectangular sheets (182), with a first frame part (12) and a second frame part (14) which is movable towards and away relative to the first frame part, the movement being effected parallel to the principal plane of the pile, and with means which, on movement of the frame parts away from one another, remove an individual sheet (188) at one end of the pile and add it to the other end of the pile as the frame parts are pushed back together, which means comprise:

a separating means (20, 266) for separating the individual sheet (188) from the pile (182),

a feeding means (460) for feeding sheets to the separating means,

a first retaining means for retaining the separated individual sheet in the first frame part,

a second retaining means (20) for retaining the remainder of the pile in the second frame part, and

a guide means (32, 288) for guiding the separated individual sheet to the other end of the pile,

characterized in that the first retaining means comprises a pincer-like arrangement with a first pincer member (506) displaceable relative to the individual sheet (188), which pincer member positions itself on the side of the individual sheet facing the remainder of the pile prior to its separation and presses the other side of the individual sheet against a second pincer member (266) arranged in the first frame part (12), and that means (20, 508) are provided for controlling the displacement of the first pincer member in dependence on the relative movement of the frame parts.

2. A device according to claim 1, characterized in that faces of at least one of the pincer members coming into contact with the individual sheet have a retentive covering (290).

3. A device according to claim 1, characterized in that the first pincer member (278) is pivotally movable.

4. A device according to claim 1, characterized in that the first pincer member (278) is constructed as a rigid jaw member.

5. A device according to claim 1, characterized in that the first pincer member is resilient.

6. A device according to claim 1, characterized in that the second pincer member (266) is formed on the first frame part (12).

7. A device according to claim 6, characterized in that the second pincer member (266) is a wall of the first frame part (12).

8. A device according to one of the preceding claims, characterized by a spring assembly (282) for biassing the pincer members into one of their end positions.

9. A device according to claim 8, characterized in that the first pincer member (278) is spring-biassed into one of its end positions.

10. A device according to claim 9, characterized in that the first pincer member (278) is spring-biassed into the retaining position.

11. A device according to one of claims 8 to 10, characterized in that the pincer members are spring-biassed into the retaining position and are arranged to be brought by the control means (11) against the spring bias into the release position.

12. A device according to one of the preceding claims, characterized in that the control means are arranged on the second frame part.

13. A device according to claim 1 or 12, characterized in that the control means comprise a control cam.

14. A device according to claim 1, characterized in that the control means comprise a control member (284) movable relative to both frame parts.

15. A device according to one of the preceding claims, characterised in that the pincer-like arrangement (284, 288) is so constructed and arranged that the edge of the individual sheet is brought into a proper position for the return.

16. A device according to claim 15, characterized in that the pincer-like arrangement includes an element of the guide means that guides the individual sheet edge substantially perpendicularly to the direction of movement of the frame parts.

17. A device according to claim 15 or 16, characterized in that the pincer-like arrangement forms a stop for positioning the individual sheet.

18. A device according to one of the preceding claims, characterized in that the pincer-like arrangement is arranged to engage the leading transverse edge of the individual sheet.

19. A device according to claim 18, characterized in that the pincer-like arrangement is effective at at least two points of the transverse edge.

20. A device according to claim 18, characterized in in that the pincer-like arrangement grips the individual sheet in the conveying direction behind the second retaining means.

21. A device according to one of claims 1 to 17, characterized in that the pincer-like arrangement is arranged to engage at least one edge of the individual sheet parallel to the withdrawal direction.

22. A device according to one of the preceding claims, characterized in that the pincer-like arrangement is effective over the entire withdrawal path of the frame parts.

23. A device according to one of the preceding claims, characterized in that the pincer-like arrangement is arranged to brought into the position in which it releases the sheet only after a partial return stroke of the frame parts.

24. A device according to one of the preceding claims, characterized in that a part of the pincer-like arrangement (710, 712) is at the same time an element of the feeding means.

25. A device according to claim 24, characterized in that the feeding means comprises a retentive element (710) engaging the side of the individual sheet remote from the remainder of the pile.

26. A device according claims 25, characterized in that the retentive element (710) is arranged on the second pincer member.

27. A device according to one of claims 1 to 23, characterized in that as feeding means there is provided a transporter (460) engaging the individual sheet at its trailing edge viewed in the conveying direction.

28. A device according to one of the preceding claims, characterized in that the pincer-like arrangement comprises a wedge-like element that frictionally interacts with the individual sheet.

29. A device according to claim 28, characterized in that the wedge-like element comprises a roller mounted in slots.

30. A device according to one of the preceding claims, characterized in that one of the frame parts is a housing provided with a viewing window, from which housing the other frame part in the form of a slider member can be withdrawn.

31. A device according to claim 30, characterized in that the first frame part forms the housing and the second frame part forms the slider member.

32. A device according to claim 31, characterized in that the individual sheet is removed on the side of the pile remote from the viewing window.

33. A device according to claim 1, characterized in that the second pincer member is arranged on the first frame part such that it is movable relative thereto.

34. A device according to claim 33, characterized in that the second pincer member is biassed by a spring into an end position.

35. A device according to claim 3, characterized in that the first pincer member is pivotable about an axis running perpendicularly to the direction of movement of the frame parts.

36. A device according to one of the preceding claims, characterized in that the first pincer member is displaceable relative to the first frame part.

37. A device according to claim 36, characterized in that the first pincer member is displaceable in the direction of movement of the frame parts.

FIG. 1

EP 0 201 594 B1

## FIG. 2

## FIG. 3

FIG. 4

FIG. 5

FIG.6

FIG.7

FIG.8

FIG.9

FIG.10

FIG.11

EP 0 201 594 B1

FIG.12

FIG.13

EP 0 201 594 B1

FIG. 14

FIG. 15

FIG. 16

FIG.17

FIG.19

FIG.18

EP 0 201 594 B1

FIG.20

FIG.22

FIG.21

EP 0 201 594 B1

FIG.23

FIG.24

FIG.25

FIG. 26

EP 0 201 594 B1

FIG. 26 a

FIG. 27

FIG. 28

FIG. 29

FIG. 30

FIG. 31

FIG. 32

FIG. 33

FIG. 34

FIG. 35

FIG. 36

FIG. 37

FIG. 38

FIG.39

FIG.40

FIG. 41

FIG. 42

FIG. 43

FIG. 47

FIG. 44

FIG. 45

FIG. 46

EP 0 201 594 B1